# NOUVEAU FASCICULE DE BREVET EUROPEEN

(11) **EP 0 310 532 B2**
(45) Date de publication et mention de la décision concernant l'opposition: **18.01.1995**
(45) Mention de la délivrance du brevet: 02.01.1992
(21) Numéro de dépôt: 88440078.9
(22) Date de dépôt: 26.09.1988
(51) Int. Cl.: A01D 75/20, A01D 78/10

(54) **Machine de fenaison avec un dispositif de protection perfectionné**
Heuwendemaschine mit einer verbesserten Schutzvorrichtung
Hay-making machine having an improved protective device

(30) Priorité: 01.10.1987 FR 8713757
(43) Date de publication de la demande: 05.04.1989
(73) Titulaire: KUHN S.A., F-67700 Saverne (FR)
(72) Inventeur: Quirin, Michel, Allenwiller F-67310 Wasselonne (FR)
(74) Mandataire: Andres, Jean-Claude

(56) Documents cités:
- EP-A- 0 083 460
- EP-B- 83 460
- WO-A-87/04587
- DE-A- 1 482 104
- DE-A- 2 423 326
- DE-B- 2 127 739
- DE-U- 1 998 710
- DE-U- 8 625 784
- DE-U- 8 709 233
- DE-U- 8 712 165
- FR-A- 1 480 616
- FR-A- 2 063 497
- FR-A- 2 179 024

## Description

La présente invention se rapporte aux machines de fenaison comportant un châssis portant plusieurs roues râteleuses munies d'outils de travail, lequel châssis est réalisé en une partie centrale et des parties latérales qui sont articulées sur ladite partie centrale au moyen de pivots autour desquels elles sont repliables vers le haut pour le transport et/ou la dépose, un dispositif de protection qui est également réalisé en plusieurs parties étant relié audit châssis, lequel dispositif de protection comporte des parties latérales qui sont munies d'axes d'articulation et qui sont commandées de telle sorte qu'elles se déplacent automatiquement avec les parties latérales du châssis, autour de leurs axes d'articulation, pour le transport et/ou la dépose, dans une position sensiblement verticale dans laquelle elles se situent près des extrémités extérieures des outils de travail qui sont dirigés vers les côtés.

Sur une machine de ce genre, connue dans la demande de brevet EP-A-83 460, chaque partie latérale du dispositif de protection est constituée par un cadre de forme sensiblement rectangulaire et dont un des côtés est articulé sur le châssis de la machine. Ces cadres n'assurent de protection que sur les moitiés avant des roues râteleuses latérales. Les moitiés arrière de ces roues râteleuses ne comportent aucun dispositif de protection. Dans la position de transport et/ou de dépose, les personnes, les animaux ou les véhicules qui se trouvent à proximité peuvent entrer en collision avec les extrémités des outils de travail qui pointent vers l'extérieur.

D'autre part, les moyens qui commandent les déplacements des parties latérales du dispositif de protection autour d'axes perpendiculaires aux pivots des parties latérales du châssis de la machine, lors de la mise en position de transport et/ou de dépose, sont constitués par des butées et des ressorts.

La présente invention a pour but de remédier à ces inconvénients. Elle doit notamment empêcher d'une manière sûre les collisions accidentelles avec les extrémités de tous les outils de travail qui sont dirigés vers l'extérieur.

A cet effet, selon l'invention, le dispositif de protection comporte une partie centrale solidaire de la partie centrale du châssis et deux parties latérales constituée chacune par au moins deux pièces de forme allongée dont l'une est disposée à l'arrière et l'autre à l'avant des parties latérales du châssis et de leurs roues râteleuses, les parties latérales sont articulées sur la partie centrale du dispositif de protection au moyen d'axes d'articulation qui sont sensiblement parallèles aux pivots des parties latérales du châssis et se situent au-delà de ces pivots à une distance qui est au moins égale à la hauteur des roues râteleuses et les parties latérales du dispositif de protection sont commandées au moyen de tringles qui sont reliées aux parties latérales du châssis.

Le dispositif ainsi agencé assure une protection quasi parfaite à la fois dans la position de travail et dans la position de transport et/ou de dépose. Dans cette dernière position, il arrête ou repousse tout ce qui s'approche, aussi bien par le côté avant que par le côté arrière, des extrémités extérieures des outils de travail.

En sus, les déplacements des parties latérales du dispositif de protection et des parties latérales du châssis de la machine s'effectuent dans la même direction. Ces déplacements peuvent, de ce fait, être combinés avec les tringles qui assurent un positionnement correct du dispositif de protection par rapport aux roues râteleuses de la machine dans chaque position.

La mise en oeuvre du dispositif selon l'invention est en plus relativement simple et peu coûteuse.

D'autres caractéristiques de l'invention consistent en ce que les parties latérales du dispositif de protection s'étendent de part et d'autre d'une partie centrale solidaire du châssis de la machine, que chacune des parties latérales est réalisée en forme de U et que le dispositif de protection ainsi constitué s'étend de façon continue tout autour des roues râteleuses. La protection ainsi conférée est totale à la fois en position de travail et en position de transport et/ou de dépose.

Les tringles qui commandent les déplacements des parties latérales du dispositif de protection sont disposées de telle sorte qu'elles soient sensiblement parallèles ou légèrement inclinées aux plans contenant les parties latérales du dispositif de protection dans la position de travail et qu'elles soient sensiblement perpendiculaires aux plans contenant lesdites parties latérales du dispositif de protection dans la position de transport et/ou de dépose. Cette disposition contribue à faire passer les parties repliables du châssis avec leurs roues râteleuses à travers les plans délimités par les parties latérales du dispositif de protection lorsque ces dernières sont plus proches de leur position de travail que de leur position repliée vers le haut. Cette caractéristique permet au dispositif de protection d'épouser d'assez près le contour des roues râteleuses, notamment aux deux extrémités de la machine.

D'autres caractéristiques de l'invention apparaîtront dans les autres sous-revendications, ainsi que dans la description ci-après d'un exemple de réalisation non-limitatif de l'invention, avec référence aux dessins annexés dans lesquels :
- La figure 1 représente une vue de face d'une machine selon l'invention avec une moitié en position de travail et l'autre moitié en position de tansport et/ou de dépose.
- La figure 2 représente une vue de dessus de la machine de la figure 1.
- la figure 3 représente une vue de dessus à plus grande échelle, d'une partie du dispositif de protection.
- La figure 4, représente la même partie du dispositif de protection en tue de face.

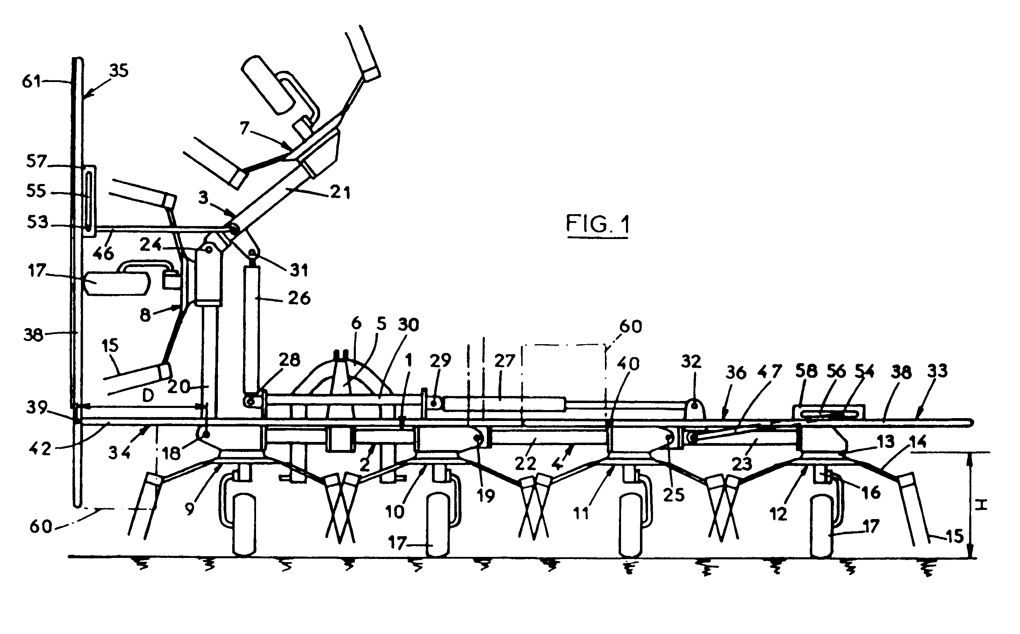

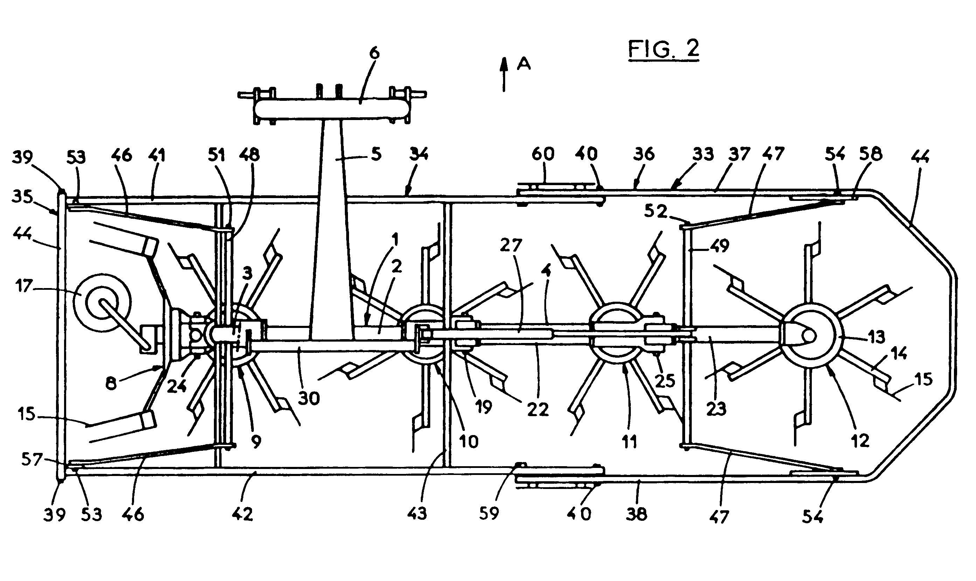

La machine de fenaison représentée sur les figures 1 et 2 comporte un châssis (1) composé d'une partie centrale (2) et de deux parties latérales (3 et 4) situées de part et d'autre de ladite partie centrale. A cette partie centrale (2) est reliée une poutre (5) qui s'étend vers l'avant et porte à son extrémité avant un chevalet (6) destiné à permettre l'accouplement de la machine su dispositif de relevage trois pointe d'un tracteur.

Dans l'exemple représenté, la machine comporte six roues râteleuses (7 à 12) situées sous le châssis (1). La partie centrale (2) de ce châssis et chaque partie latérale (3 et 4) est équipée de deux roues râteleuses. Des machines avec uniquement quatre roues râteleuses peuvent bien entendu aussi être équipées d'un dispositif de protection conforme à l'invention. Dans ce cas chaque partie latérale du châssis ne comporte qu'une seule roue râteleuse.

Les roues râteleuses (7 à 12) sont sensiblement identiques. Chacune est constituée par un moyeu (13) auquel sont fixés plusieurs bras (14) portant des fourches de travail (15) à leurs extrémités extérieures. Chaque moyeu (13) est monté de manière à pouvoir tourner sur un axe support fixe (16) sensiblement vertical ou incliné dans la direction d'avancement (A) de la machine en position de travail. Ces axes (16) sont fixés au châssis (1) et portent à leurs extrémités inférieures des roulettes (17) permettant de déplacer la machine sur le sol durant le travail.

Dans la position de travail qui est représentée sur la moitié droite de la machine des figures 1 et 2, les roues râteleuses (7 à 12) sont sensiblement alignées. Elles sont entraînées en rotation d'une manière connue en soi à partir de l'arbre de prise de force du tracteur d'entraînement. A cet effet, des arbres d'entraînement munis de pignons qui coopèrent avec des couronnes dentées reliées aux moyeux (13) des roues râteleuses (7 à 12) sont logés dans les parties (2, 3 et 4) du châssis (1). Les roues râteleuses (7 à 12) tournent alors deux à deux en convergence à l'avant - vu dans le sens d'avancement A-. Par suite de cette rotation, leurs fourches (15) déplacent le fourrage et assurent un fanage d'excellente qualité. Il est évident que des roues râteleuses destinées à effectuer des andains ou bien pouvant réaliser à la fois le fanage et l'andainage pourraient aussi être prévues sur cette machine.

Pour le transport et/ou la dépose, les parties latérales (3 et 4) du châssis (1) peuvent être déplacées vers le haut d'un angle d'environ 90° autour de pivots (18 et 19) accouplant lesdites parties latérales à la partie centrale (2). Ces pivots (19) sont sensiblement horizontaux et sont dirigés dans la direction d'avancement (A) de la machine. Ces repliements vers le haut permettent de réduire la largeur de la machine de manière à pouvoir la déplacer sur une route ou pour le remisage (voir côté gauche de la machine sur les figures 1 et 2).

Dans le cas de machines avec six roues râteleuses chaque partie latérale (3 et 4) du châssis peut être réalisée en deux segments (20, 21 et 22, 23) articulés entre eux au moyen de pivots (24 et 25) sensiblement parallèles aux pivots (18 et 19) précités. Chaque segment (20 à 23) est muni d'une roue râteleuse. Ces pivots (24 et 25) permettent aux roues râteleuses (7, 8 et 11, 12) de bien suivre les dénivellations du sol durant le travail. De plus, au transport les roues râteleuses (7 et 12) des deux extrémités extérieures peuvent être basculées vers le milieu de la machine de manière à réduire la hauteur de la machine (Fig. 1, côté gauche).

Le repliement vers le haut des parties latérales (3 et 4) du châssis (1) est avantageusement assuré au moyen de vérins hydrauliques (26, 27). Il ressort notamment de la figure 1 que chaque vérin (26, 27) est articulé au moyen d'un axe (28, 29) sur un appui (30) solidaire de la partie centrale (2) du châssis et au moyen d'un second axe (31, 32) sur le segment extérieur (21, 23) de chaque partie latérale (3, 4) du châssis (1). L'actionnement de ces vérins (26, 27) se fait à partir du tracteur d'entraînement. Au relevage les segmente extérieurs (21, 23) se lèvent en premier et entraînent les segmente intérieurs (20, 22) dès que les butées prévues au niveau des articulations (24, 25) arrivent en contact. Lesdits vérins peuvent être à double ou à simple effet. Dans ce dernier cas, le retour des parties latérales (3 et 4) dans la position de travail se fait sous l'effet de leur propre poids. Les arbres d'entraînement des roues râteleuses (7, 8, 11 et 12) des parties latérales (3 et 4) comportent des articulations au niveau des pivots (18, 19, 24 et 25) de manière à ce qu'ils puissent se déplacer avec lesdites parties latérales (3 et 4) du châssis (1).

Audit châssis (1) est relié un dispositif de protection (33). Durant le travail celui-ci empêche notamment que les roues râteleuses (7 à 12) n'entrent en collision avec des obstacles tels que des arbres ou que des personnes ou des animaux ne puissent pénétrer accidentellement dans la trajectoire de leurs outils (15). Ce dispositif de protection (33) est réalisé en profilés. Il se compose d'une partie centrale (34) et de deux parties latérales (35 et 36). Chacune de ces dernières est constituée par au moins deux pièces (37 et 38) de forme allongée dont l'une (38) se trouve à l'arrière des roues râteleuses (7, 8, 11 et 12) et l'autre (37) à l'avant de celles-ci. Ces parties latérales (35, 36) du dispositif de protection (33) sont articulées par rapport au châssis (1) de la machine autour d'axes (39 et 40). Elles sont en sus commandées de telle sorte qu'elles se déplacent automatiquement autour des axes (39 et 40) pour le transport et/ou la dépose dans une position sensiblement verticale dans laquelle elles se situent près des extrémités extérieures des outils de travail (15) qui sont dirigés vers les côtés. Grâce à cet agencement les parties latérales (35 et 36) assurent aussi une protection efficace lorsque la machine est en position de transport et/ou de dépose. Cette protection est pratiquement parfaite lorsque les deux pièces (37 et 38) de chaque partie latérale (35, 36) du dispositif de protection (33) se situent, comme cela ressort des figures 1 et 2 (côté gauche de la machine), au-delà des extrémités extérieures des outils de travail (15) dirigés vers les côtés. Les parties latérales (35, 36) peuvent ainsi dépasser lesdites extrémités des outils de travail (15) d'une dizaine de centimètres.

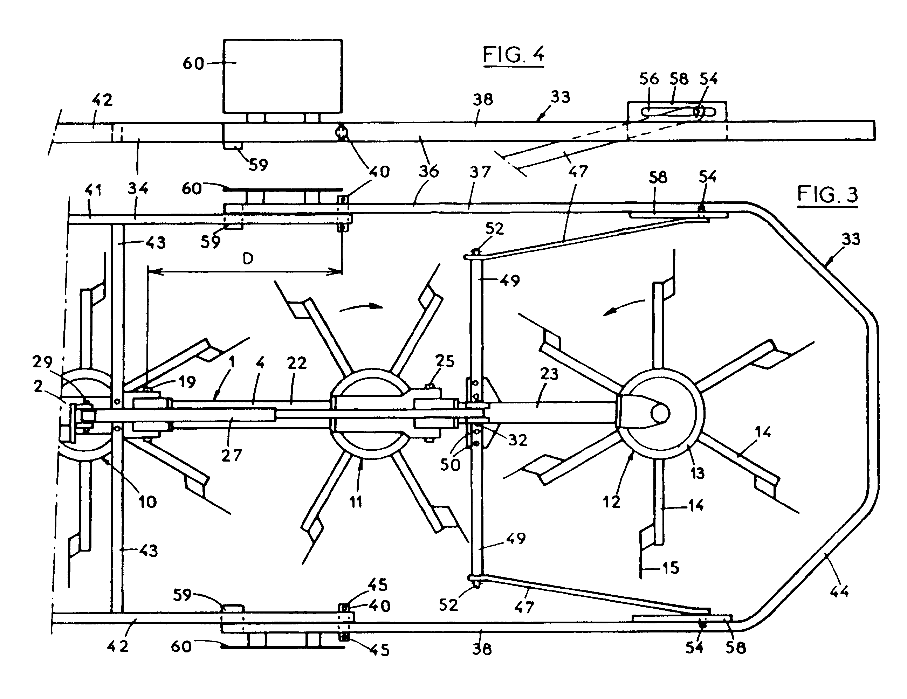

La partie centrale (34) du dispositif de protection (33) est également composée de deux pièces (41, 42) de forme allongée. Ces pièces (41, 42) sont rendues solidaires de la partie centrale (2) du châssis (1) au moyen de traverses (43) qui sont vissées sur ladite partie centrale (voir figure 3). L'une (41) de ces pièces se situe sur le côté avant du châssis (1) tandis que l'autre pièce (42) se situe à l'arrière de celui-ci.

Le dispositif de protection (33) est agencé de telle sorte que ses parties latérales (35 et 36) s'étendent de part et d'autre de la partie centrale (34) et pratiquement dans le prolongement de celle-ci. De plus, les deux pièces (37 et 38) de chaque partie latérale (35, 36) sont reliées entre-elles au moyen de portions cintrées (44) qui protègent totalement les côtés de la machine. Chaque partie latérale (35, 36) est ainsi réalisée en forme de U. Le dispositif de protection (33) s'étend ainsi de façon continue tout autour des roues râteleuses (7 à 12) et du châssis (1) pour en assurer une protection complète.

Les axes d'articulation (39 et 40) des parties latérales (35 et 36) du dispositif de protection (33) se situent sur la partie centrale (34) de ce dernier. Ils sont sensiblement parrallèles aux pivots (18, 19, 24 et 25) des parties latérales (3 et 4) du châssis (1) et sont immobilisés dans la direction de leur longueur au moyen de goupilles (45) (voir les figures 3 et 4). Ces axes d'articulation (39, 40) se situent au-delà des pivots (18 et 19) des parties latérales (3 et 4) du châssis (1) et à une distance (D) desdits pivots qui est au moins égale à la hauteur (H) des roues râteleuses (7 à 12). De ce fait il n'y a pas de réglages particuliers à effectuer pour amener les parties latérales (35 et 36) du dispositif de protection (33) dans la bonne position pour le transport et/ou la dépose, après qu'elles aient pivoté vers le haut.

La commande automatique des parties latérales (35 et 36) du dispositif de protection (33) durant la transposition de la machine est assurée au moyen de tringles (46 et 47). Celles-ci sont constituées par des tiges reliées aux parties latérales (3 et 4) du châssis (1) par l'intermédiaire d'entretoises (48 et 49). Ces entretoises sont fixées sur les segments extérieurs (21 et 23) desdites parties latérales (3 et 4) au moyen de boulons (50). Elles portent à leurs extrémités des axes (51, 52) sur lesquels sont articulées les tringles (46 et 47). Ces axes (51, 52) sont sensiblement parallèles aux pivots (24 et 25) et se situent - vu de face - à proximité de ces derniers. Les tringles (46 et 47) sont par ailleurs liées aux parties latérales (35 et 36) du dispositif de protection (33) par des tétons (53 et 54) qui sont guidés dans des orifices oblongs (55 et 56) de plaques (57 et 58) solidaires desdites parties latérales et se situant au niveau des roues râteleuses extérieures (7 et 12) dans la position de travail (Fig. 3 et 4). Lesdits axes d'articulation (51 et 52), d'une part, et les tétons (53 et 54) dans les orifices (55 et 56) d'autre part, sont agencés de telle sorte que les tringles (46 et 47) soient sensiblement parallèles ou légèrement inclinées par rapport aux plans contenant les parties latérales (35 et 36) du dispositif de protection (33) dans la position de travail et qu'elles soient sensiblement perpendiculaires aux plans contenant lesdites parties latérales (35 et 36) dans la position de transport et/ou de dépose.

La commande au moyen des tringles (46 et 47) s'effectue de la manière décrite ci-après. Dans la position de travail les roues râteleuses (7, 8, 11 et 12) des parties latérales (3 et 4) du châssis (1) se situent pratiquement totalement sous le dispositif de protection (33). Pour la transposition de la machine dans la position de transport et/ou de dépose, cas parties latérales (3 et 4) avec les roues râteleuses (7, 8, 11 et 12) sont déplacées vers le haut autour des pivots (18 et 19) au moyen des vérins hydrauliques (26 et 27). Lors de ce relevage, les roues râteleuses extérieures (7 et 12) effectuent un déplacement supplémentaire autour des pivots (24 et 25) de leurs segments (21 et 23).

Les parties latérales (3 et 4) du châssis (1) tirent alors sur les tringles (46 et 47) et les entraînent vers le haut. Par suite de cette traction, leurs tétons (53 et 54) glissant dans les orifices oblongs (55 et 56) jusqu'à ce qu'ils arrivent en fin de course dans ces orifices. A partir de ce moment ils tirent sur les parties latérales (35 et 36) du dispositif de protection (33) et les entraînent vers le haut autour de leurs axes d'articulation (39 et 40). Le déplacement desdites parties latérales (35 et 36) est ainsi, au départ de la mise en position de transport, plus lent que celui des parties latérales (3 et 4) du châssis (1). Ceci est dû aux glissements dans les orifices (55 et 56) des tétons (53 et 54) des tringles (46 et 47) et à la disposition de cas dernières par rapport aux parties latérales (35 et 36) du dispositif de protection (33) et aux parties latérales (3 et 4) du châssis (1). De ce fait, les roues râteleuses (7, 8, 11 et 12) des parties latérales (3 et 4) passent rapidement à travers les plans délimités par les parties latérales (35 et 36) du dispositif de protection (33) dès le début du relevage. Une fois que la position de transport et/ou de dépose est atteinte, ces roues râteleuses (7, 8, 11 et 12) se situent pratiquement totalement à l'intérieur du volume défini par le dispositif de protection (33).

Pour passer de la position de transport et/ou de dépose dans la position de travail les vérins (26 et 27) exercent une poussée sur les parties latérales (3 et 4) du châssis (1). Celles-ci basculent alors vers l'extérieur et repassent à travers les plans délimités par les parties latérales (35 et 36) du dispositif de protection (33) lorsque celles-ci sont proches de leur position basse.

Les parties latérales (35 et 36) du dispositif de protection (33) comportent des extrémités intérieures qui s'étendent au-delà de leurs axes d'articulation (39 et 40). Chacune de ces extrémités est pourvue d'une butée (59). Ces butées (59) se placent contre les pièces (41 et 42) de la partie centrale (34) du dispositif de protection (33) dès que celui-ci atteind sa position de travail. Ces butées (59) limitent ainsi le déplacement vers le bas des parties latérales (35 et 36) du dispositif de protection (33).

Dans la position de travail les orifices oblongs (55 et 56) permettent aussi aux parties latérales (3 et 4) du châssis (1) et aux roues râteleuses (7, 8 et 11, 12) s'y rapportant de se déplacer légèrement dans un plan vertical sans que les tringles (46 et 47) actionnent immédiatement les parties latérales (35 et 36) du dispositif de protection (33). Lesdites roues râteleuses (7, 8, 11 et 12) peuvent ainsi suivre les denivellations du sol indépendamment du dispositif de protection (33).

Il ressort aussi notamment des figures 3 et 4 que les extrémités intérieures des parties latérales (35 et 36) du dispositif de protection (33) sont munies de plaques de signalisation (60). Durant les transpositions de la machine, ces plaques (60) changent automatiquement de position aves les parties latérales (35 et 36) du dispositif de protection (33). Dans la position de travail elles se situent au-dessus de châssis (1) tandis que dans la position de transport et/ou de dépose, elles se situent pratiquement sous ledit châssis (1). Dans cette dernière position elles assurent également une protection des roues râteleuses centrales (9 et 10) (voir figure 1, côté gauche de la machine).

Il peut d'autre part être prévu un écran (61) sur les parties latérales (35 et 36) du dispositif de protection (33) dans la position de transport et/ou de dépose. Ces écrans (61) peuvent se fixer sur lesdites parties latérales en vue d'obturer totalement ou partiellement les plans délimités par ces parties latérales (35 et 36). Les écrans (61) empêchent ainsi d'approcher par les côtés les outils de travail (15) qui sont dirigés vers l'extérieur. Ils peuvent être constitués par des plaques, des treillis ou des éléments analogues.

## Revendications

1. Machine de fenaison comportant un châssis (1) portant plusieurs roues râteleuses (7 à 12) munies d'outils de travail (15), lequel châssis est réalisé en une partie centrale (2) et des parties latérales (3 et 4) qui sont articulées sur ladite partie centrale au moyen de pivots (18 et 19) autour desquels elles sont repliables vers le haut pour le transport et/ou la dépose, un dispositif de protection (33) qui est également réalisé en plusieurs parties (34, 35 et 36) étant relié au châssis (1), lequel dispositif de protection (33) comporte des parties latérales (35 et 36) qui sont munies d'axes d'articulation (39 et 40) et qui sont commandées de telle sorte qu'elles se déplacent automatiquement avec les parties latérales (3 et 4) du châssis (1), autour de leurs axes d'articulation (39 et 40), pour le transport et/ou la dépose, dans une position sensiblement verticale dans laquelle elles se situent près des extrémités extérieures des outils de travail (15) qui sont dirigés vers les côtés, caractérisée par le fait que le dispositif de protection (33) comporte une partie centrale (34) solidaire de la partie centrale (2) du châssis (1) et deux parties latérales (35, 36) constituée chacune par au moins deux pièces (37 et 38) de forme allongée, dont l'une est disposée à l'arrière et l'autre à l'avant des parties latérales (3, 4) du châssis (1) et de leurs roues râteleuses (7, 8, 11, 12), que les parties latérales (35, 36) sont articulées sur la partie centrale (34) du dispositif de protection (33) au moyen d'axes d'articulation (39et 40) qui sont sensiblement parallèles aux pivots (18 et 19) des parties latérales (3 et 4) du châssis (1) et se situent au-delà de ces pivots (18 et 19) à une distance (D) qui est au moins égale à la hauteur (H) des roues râteleuses (7 à 12) et que les parties latérales (35 et 36) du dispositif de protection (33) sont commandées au moyen de tringles (46 et 47) qui sont reliées aux parties latérales (3 et 4) du châssis (1).

2. Machine de fenaison selon la revendication 1, caractérisée par le fait que dans la position de transport et/ou de dépose, les deux pièces (37 et 38) des parties latérales (35 et 36) du dispositif de protection (33) se situent au-delà des extrémités extérieures des outils de travail (15) dirigés vers les côtés.

3. Machine de fenaison selon la revendication 1, caractérisée par le fait que la partie centrale (34) du dispositif de protection (33) est composée de deux pièces (41 et 42) de forme allongée qui sont solidaires de la partie centrale (2) du châssis (1) et dont l'une se situe à l'avant de ce châssis et l'autre à l'arrière de celui-ci.

4. Machine de fenaison selon la revendication 3, caractérisée par le fait que les parties latérales (35 et 36) du dispositif de protection (33) s'étendent de part et d'autre de la partie centrale (34) et pratiquement dans le prolongement de celle-ci.

5. Machine de fenaison selon l'une quelconque des revendications précédentes, caractérisée par le fait que les deux pièces (37 et 38) de chaque partie latérale (35 et 36) du dispositif de protection (33) sont reliées entre-elles au moyen de portions cintrées (44), chacune de ces parties latérales ayant la forme d'un U.

6. Machine de fenaison selon la revendication 5, caractérisée par le fait que le dispositif de protection (33) s'étend de façon continue tout autour des roues râteleuses (7 à 12) du châssis (1).

7. Machine de fenaison selon la revendication 1, caractérisée par le fait que les tringles (46 et 47) sont articulées sur des axes (51 et 52) qui sont sensiblement parallèles aux pivots (18 et 19) des parties latérales (3 et 4) du châssis (1) et qui sont solidaires desdites parties latérales du châssis.

8. Machine de fenaison selon la revendication 7, comportant un châssis (1) muni de six roues râteleuses (7 à 12) et sur lequel les parties latérales (3 et 4) repliables vers le haut sont réalisées en deux segments (20, 21 et 22, 23) articulés entre eux au moyen de pivots (24 et 25) et portant chacun une roue râteleuse, caractérisée par le fait que les axes d'articulation (51 et 52) des tringles (46 et 47) sont solidaires des segments extérieurs (21 et 23) des parties latérales (3 et 4) du châssis (1) et se situent à proximité de leurs pivots (24 et 25).

9. Machine de fenaison selon l'une quelconque des revendications 1, 7 et 8, caractérisée par le fait que les tringles (46 et 47) sont sensiblement parallèles ou légèrement inclinées par rapport aux plans contenant les parties latérales (35 et 36) du dispositif de protection (33) dans la position de travail et qu'elles sont sensiblement perpendiculaires aux plans contenant les parties latérales (35 et 36) du dispositif de protection (33) dans la position de transport et/ou de dépose.

10. Machine de fenaison selon l'une quelconque des revendications précédentes, caractérisée par le fait que dans la position de travail, les roues râteleuses (7, 8, 11 et 12) des parties latérales (3 et 4) du châssis (1) se situent pratiquement totalement sous le dispositif de protection (33) et qu'en position de transport et/ou de dépose ces mêmes roues râteleuses (7, 8, 11 et 12) se situent pratiquement totalement sur le côté opposé par rapport audit dispositif de protection.

11. Machine de fenaison selon la revendication 10, caractérisée par le fait que lors de la transposition de la machine de la position de travail dans la position de transport et inversement, les roues râteleuses (7, 8, 11 et 12) des parties latérales (3 et 4) du châssis (1) passent à travers les plans délimités par les parties latérales (35 et 36) du dispositif de protection (33).

12. Machine de fenaison selon l'une quelconque des revendications précédentes, caractérisée par le fait que les tringles (46 et 47) sont liées aux parties latérales (35 et 36) du dispositif de protection (33) au moyen de tétons (53 et 54) guidés dans des orifices oblongs (55 et 56) de plaques (57 et 58) solidaires desdites parties latérales du dispositif de protection (33).

13. Machine de fenaison selon la revendication 1, caractérisée par le fait que les parties latérales (35 et 36) du dispositif de protection (33) comportent des butées (59) pour limiter leur déplacement.

14. Machine de fenaison selon l'une quelconque des revendications précédentes, caractérisée par le fait que les parties latérales (35 et 36) du dispositif de protection (33) comportent des plaques de signalisation (60).

15. Machine de fenaison selon l'une quelconque des revendications précédentes, caractérisée par le fait que dans la position de transport et/ou de dépose, les plans délimités par les parties latérales (35 et 36) du dispositif de protection (33) peuvent être au moins partiellement obturés au moyen d'écrans (61).

## Claims

1. Haymaking machine with a frame (1) supporting several raking wheels (7 to 12) equipped with work tools (15), said frame being made up of one central part (2) and lateral parts (3 and 4) articulated on said central part by means of pivots (18 and 19) around which they can be folded upwardly for transport and/or for parking, a protecting device (33) also made up of several parts (34, 35 and 36) being connected to the frame (1), said protecting device (33) comprising lateral parts (35 and 36) provided with axes of articulation (39 and 40), and which are controlled in such a manner that they automatically move with the lateral parts (3 and 4) of the frame (1) around their axes of articulation (39 and 40), for transport and/or parking, in an approximately vertical position in which they are located in the vicinity of the outer ends of the laterally directed work tools (15), characterized in that the protecting device (33) comprises a central part (34) fastened to the central part (2) of the frame (1) and two lateral parts (35, 36) each made up of at least two long-shaped components (37 and 38), one of which is located at the rear and the second in front of the lateral parts (3, 4) of the frame (1) and of their raking wheels (7, 8, 11, 12), that the lateral parts (35, 36) are articulated on the central part (34) of the protecting device (33) by means of axes of articulation (39 and 40) which are approximately parallel to the pivots (18 and 19) of the lateral parts (3 and 4) of the frame (1) and are located beyond these pivots (18 and 19) in a distance (D) at least equal to the height (H) of the raking wheels (7 to 12) and that the lateral parts (35 and 36) of the protecting device (33) are controlled by means of rods (46 and 47) connected to the lateral parts (3 and 4) of the frame (1).

2. Haymaking machine according to claim 1, characterized in that the two components (37 and 38) of the lateral parts (35 and 36) of the protecting device (33) are located beyond the outer ends of the laterally directed work tools (15) in the transport and/or the parking position.

3. Haymaking machine according to claim 1, characterized in that the central part (34) of the protecting device (33) is made up of two long-shaped components (41 and 42) fastened to the central part (2) of the frame (1) and located one in front and the second in the rear of this frame.

4. Haymaking machine according to claim 3, characterized in that the lateral parts (35 and 36) of the protecting device (33) extend on either side of the central part (34) and approximately in its continuation.

5. Haymaking machine according to anyone of the preceding claims, characterized in that the two components (37 and 38) of each lateral part (35 and 36) of the protecting device (33) are connected one to the other by means of curbed sections (44), each of these lateral parts being U-shaped.

6. Haymaking machine according to claim 5, characterized in that the protecting device (33) extends continuously all around the raking wheels (7 to 12) of the frame (1).

7. Haymaking machine according to claim 1, characterized in that the rods (46 and 47) are articulated on axes (51 and 52) which are approximately parallel to the pivots (18 and 19) of the lateral parts (3 and 4) of the frame (1) and which are fastened to said lateral parts of the frame.

8. Haymaking machine according to claim 7 with a frame (1) equipped with six raking wheels (7 to 12) and on which the lateral parts (3 and 4) which may be folded upwardly are made up of two segments (20, 21 and 22, 23) articulated one to the other by means of pivots (24 and 25) and each supporting one raking wheel, characterized in that the axes of articulation (51 and 52) of the rods (46 and 47) are fastened to the outer segments (21 and 23) of the lateral parts (3 and 4) of the frame (1) and are located in the vicinity of their pivots (24 and 25).

9. Haymaking machine according to anyone of claims 1, 7 and 8, characterized in that the rods (46 and 47) are approximately parallel or slightly tilted with regard to the planes including the lateral parts (35 and 36) of the protecting device (33) in the work position and approximately perpendicular to the planes including the lateral parts (35 and 36) of the protecting device (33) in the transport and/or the parking position.

10. Haymaking machine according to anyone of the preceding claims, characterized in that the raking wheels (7, 8, 11 and 12) of the lateral parts (3 and 4) of the frame (1) are located practically totally under the protecting device (33) in the work position, the same raking wheels (7, 8, 11 and 12) being located practically totally on the opposite side in relation to said protecting device in the transport and/or the parking position.

11. Haymaking machine according to claim 10, characterized in that during the transposition of the machine from the work position to the transport position and vice versa, the raking wheels (7, 8, 11 and 12) of the lateral parts (3 and 4) of the frame (1) pass through the planes delimited by the lateral parts (35 and 36) of the protecting device (33).

12. Haymaking machine according to anyone of the preceding claims, characterized in that the rods (46 and 47) are connected to the lateral parts (35 and 36) of the protecting device (33) by means of tits (53 and 54) guided in oblong holes (55 and 56) of plates (57 and 58) integral with said lateral parts of the protecting device (33).

13. Haymaking machine according to claim 1, characterized in that the lateral parts (35 and 36) of the protecting device (33) comprise stops (59) to limit their displacement.

14. Haymaking machine according to anyone of the preceding claims, characterized in that the lateral parts (35 and 36) of the protecting device (33) comprise warning plates (60).

15. Haymaking machine according to anyone of the preceding claims, characterized in that the planes delimited by the lateral parts (35 and 36) of the protecting device (33) may at least be partly closed up by means of screens (61) in the transport and/or the parking position.

## Patentansprüche

1. Heuwerbungsmaschine mit einem Rahmen (1), welcher mehrere mit Arbeitswerkzeugen (15) versehene Rechräder (7 bis 12) trägt und welcher Rahmen aus einem Mittelteil (2) und Seitenteilen (3 und 4) besteht, die am Mittelteil mittels Schwenkzapfen (18 und 19) angelenkt sind, um welche sie für den Transport und/oder das Abstellen nach oben schwenkbar sind, wobei eine Schutzvorrichtung (33), die ebenfalls mehrteilig (34, 35 und 36) ausgebildet ist, mit dem Rahmen (1) verbunden ist, welche Schutzvorrichtung (33) Seitenteile (35 und 36) aufweist, welche mit Gelenkachsen (39 und 40) versehen sind und derart gesteuert werden, dass sie sich automatisch mit den Seitenteilen (3 und 4) des Rahmens (1) um ihre Gelenkachsen (39 und 40) für den Transport und/oder das Abstellen in eine im wesentlichen vertikale Stellung verschwenken, in welcher sie sich nahe den äusseren Enden der Arbeitswerkzeuge (15) befinden, die zu den Seiten gerichtet sind, dadurch gekennzeichnet, dass die Schutzvorrichtung (33) einen Mittelteil (34), der fest mit dem Mittelteil (2) des Rahmens (1) verbunden ist und zwei Seitenteile (35, 36) umfasst, von denen jeder aus zumindest zwei langgestreckt geformten Teilen (37 und 38) besteht, wobei einer hinter und der andere vor den Seitenteilen (3, 4) des Rahmens (1) und ihrer Rechräder (7, 8, 11, 12) angeordnet ist, dass die Seitenteile (35, 36) an dem Mittelteil (34) der Schutzvorrichtung (33) mittels Schwenkachsen (39 und 40) angelenkt sind, die im wesentlichen parallel zu den Schwenkzapfen (18 und 19) der Seitenteile (3 und 4) des Rahmens (1) sind und sich weiter aussen als diese Schwenkzapfen (18 und 19) befinden und zwar in einem Abstand (D), der zumindest gleich der Höhe (H) der Rechräder (7 bis 12) ist und dass die Seitenteile (35 und 36) der Schutzvorrichtung (33) durch Stangen (46 und 47) gesteuert werden, die mit den Seitenteilen (3 und 4) des Rahmens (1) verbunden sind.

2. Heuwerbungsmaschine nach Anspruch 1, dadurch gekennzeichnet, dass sich die beiden Stücke (37 und 38) der Seitenteile (35 und 36) der Schutzvorrichtung (33) in der Transport- und/oder Abstellstellung weiter aussen als die äusseren Enden der seitwärts gerichteten Arbeitswerkzeuge (15) befinden.

3. Heuwerbungsmaschine nach Anspruch 1, dadurch gekennzeichnet, dass der Mittelteil (34) der Schutzvorrichtung (33) aus zwei langgestreckt geformten Stücken (41 und 42) zusammengesetzt ist, die fest mit dem Mittelteil (2) des Rahmens (1) verbunden sind und von denen sich eines vor diesem Rahmen und das andere hinter ihm befindet.

4. Heuwerbungsmaschine nach Anspruch 3, dadurch gekennzeichnet, dass sich die Seitenteile (35 und 36) der Schutzvorrichtung (33) zu beiden Seiten des Mittelteils (34) und praktisch in dessen Verlängerung erstrecken.

5. Heuwerbungsmaschine nach irgend einem der vorhergehenden Ansprüche, dadurch gekennzeichnet, dass die beiden Stücke (37 und 38) jedes Seitenteils (35 und 36) der Schutzvorrichtung (33) miteinander durch Bogenstücke (44) verbunden sind, sodass jeder dieser Seitenteile die Form eines U bat.

6. Heuwerbungsmaschine nach Anspruch 5, dadurch gekennzeichnet, dass sich die Schutzvorrichtung (33) kontinuierlich um die Rechräder (7 bis 12) des Rahmens (1) herum erstreckt.

7. Heuwerbungsmaschine nach Anspruch 1, dadurch gekennzeichnet, dass die Stangen (46 und 47) an Achsen (51 und 52) angelenkt sind, die im wesentlichen parallel zu den Schwenkzapfen (18 und 19) der Seitenteile (3 und 4) des Rahmens (1) sind und die fest mit den Seitenteilen des Rahmens verbunden sind.

8. Heuwerbungsmaschine nach Anspruch 7 mit einem Rahmen (1), der mit sechs Rechrädern (7 bis 12) versehen ist und an dem die hochschwenkbaren Seitenteile (3 und 4) in zwei Abschnitten (20, 21 und 22, 23) ausgeführt sind, die miteinander über Schwenkzapfen (24 und 25) verbunden sind und jeweils ein Rechrad tragen, dadurch gekennzeichnet, dass die Schwenkachsen (51 und 52) der Stangen (46 und 47) fest mit den äusseren Abschnitten (21 und 23) der Seitenteile (3 und 4) des Rahmens (1) verbunden sind und sich in der Nähe ihrer Schwenkzapfen (24 und 25) befinden.

9. Heuwerbungsmaschine nach irgend einem der Ansprüche 1, 7 und 8, dadurch gekennzeichnet, dass die Stangen (46 und 47) im wesentlichen parallel oder leicht geneigt zu Ebenen sind, die die Seitenteile (35 und 36) der Schutzvorrichtung (33) in der Arbeitsstellung enthalten, und dass sie im wesentlichen senkrecht zu Ebenen sind, die die Seitenteile (35 und 36) der Schutzvorrichtung (33) in der Transport- oder Abstellstellung enthalten.

10. Heuwerbungsmaschine nach irgend einem der vorhergehenden Ansprüche, dadurch gekennzeichnet, dass sich die Rechräder (7, 8, 11 und 12) der Seitenteile (3 und 4) des Rahmens (1) in der Arbeitsstellung praktisch vollständig unter der Schutzvorrichtung (33) befinden und dass sich dieselben Rechräder (7, 8, 11 und 12) in der Transport- oder Abstellstellung praktisch vollständig auf der entgegengesetzten Seite, bezogen auf die Schutzvorrichtung befinden.

11. Heuwerbungsmaschine nach Anspruch 10, dadurch gekennzeichnet, dass die Rechräder (7, 8, 11 und 12) der Seitenteile (3 und 4) des Rahmens (1) beim Umstellen der Maschine aus der Arbeitsstellung in die Transportstellung und umgekehrt durch die Ebenen hindurchtreten, die durch die Seitenteile (35 und 36) der Schutzvorrichtung (33) umgrenzt sind.

12. Heuwerbungsmaschine nach irgend einem der vorhergehenden Ansprüche, dadurch gekennzeichnet, dass die Stangen (46 und 47) mit den Seitenteilen (35 und 36) der Schutzvorrichtung (33) über Ansätze (53 und 54) verbunden sind, die in Langlöchern (55 und 56) von mit den Seitenteilen der Schutzvorrichtung (33) fest verbundenen Platten (57 und 58) geführt sind.

13. Heuwerbungsmaschine nach Anspruch 1, dadurch gekennzeichnet, dass die Seitenteile (35 und 36) der Schutzvorrichtung (33) Anschläge (59) zur Begrenzung ihrer Verschwenkung aufweisen.

14. Heuwerbungsmaschine nach irgend einem der vorhergehenden Ansprüche, dadurch gekennzeichnet, dass die Seitenteile (35 und 36) der Schutzvorrichtung (33) Signalplatten (60) aufweisen.

15. Heuwerbungsmaschine nach irgend einem der vorhergehenden Ansprüche, dadurch gekennzeichnet, dass die durch die Seitenteile (35 und 36) der Schutzvorrichtung (33) umgrenzten Ebenen in der Transport- und/oder Abstellstellung zumindest teilweise durch Abschirmungen (61) bedeckbar sind.
